**Europäisches Patentamt**

**European Patent Office**

**Office européen des brevets**

(11) Veröffentlichungsnummer: **0 241 047**

**A1**

(12) **EUROPÄISCHE PATENTANMELDUNG**

(21) Anmeldenummer: **87105429.2**

(22) Anmeldetag: **10.04.87**

(51) Int. Cl.³: **B 60 R 7/04**

(30) Priorität: **10.04.86 DE 8609769 U**

(43) Veröffentlichungstag der Anmeldung:
**14.10.87 Patentblatt 87/42**

(84) Benannte Vertragsstaaten:
**AT BE CH DE FR GB IT LI LU NL SE**

(71) Anmelder: **Baensch, Rainer**
**Benzstrasse 12**
**D-8300 Landshut(DE)**

(72) Erfinder: **Baensch, Rainer**
**Benzstrasse 12**
**D-8300 Landshut(DE)**

(74) Vertreter: **Gustorf, Gerhard, Dipl.-Ing.**
**Mühlenstrasse 1**
**D-8300 Landshut(DE)**

(54) **Behälter.**

(57) Behälter zur Aufnahme von Kleinteilen in Fahrzeugen, der einen Boden (10) und davon abstehende Wände (12,14) aufweist, wobei zur einfachen und leicht zugänglichen Unterbringung des Behälters an einer Wand (12) Mittel zur lösbaren Befestigung im Fahrzeug ausgebildet sind.

Fig. 1

EP 0 241 047 A1

# PATENTANWALT
# DIPL.-ING. GERHARD GUSTORF
EUROPEAN PATENT ATTORNEY

MÜHLENSTRASSE 0241047
D-8300 LANDSHUT

Telefon Büro:  08 71 / 8 93 71
Privat:  08 71 / 2 57 19

PA 1 943 EP

Rainer Baensch

Benzstraße 12

8300 Landshut

---

Behälter

---

## Beschreibung

Die Erfindung betrifft einen Behälter zur Aufnahme von Kleinteilen in Fahrzeugen, der einen Boden und davon abstehende Wände aufweist.

Bei der Reise in Fahrzeugen zu Lande, auf dem Wasser und in der Luft besteht in der Regel das Bedürfnis, benötigte Gegenstände in der Nähe griffbereit zu haben und über eine Ablage zu verfügen, in der die genannten Gegenstände oder auch Abfall rasch zur Seite gelegt werden können. Dieser Wunsch ist besonders bei Fahrern von Kraftfahrzeugen vorhanden, die unterwegs die genannten Gegenstände benötigen oder ablegen wollen und denen kein Beifahrer behilflich sein kann.

Der Erfindung liegt die Aufgabe zugrunde, einen Behälter der angegebenen Gattung zur Verfügung zu stellen, der in einem Fahrzeug in unmittelbarer Nähe des Sitzes zur Verfügung steht und von der auf dem Sitz plazierten Person leicht zugänglich ist.

- 2 -

Bei dem Behälter gemäß der Erfindung wird diese Aufgabe dadurch gelöst, daß an einer Wand Mittel zur lösbaren Befestigung des Behälters im Fahrzeug ausgebildet sind.

Diese Mittel können als Ösen zum Aufhängen an Schrauben, Haken oder dgl. oder als ein Haftband ausgebildet sein. Es sind auch magnetische Mittel zum Aufhängen möglich.

Ein derartiger Behälter läßt sich ohne Schwierigkeiten am oder neben dem Sitz in einem Fahrzeug aufhängen und kann jederzeit abgenommen werden, beispielsweise zur Reinigung. Ein geeigneter Ort für die Anbringung in einem Kraftfahrzeug ist beispielsweise die Mittelkonsole.

In Weiterbildung der Erfindung ist an einer Wand des Behälters ein Klappdeckel angebracht. Der Klappdeckel kann über ein Scharnierband am oberen Rand der Wand angelenkt sein. Dabei kann das Scharnierband als Gelenkstreifen des aus Kunststoff hergestellten Behälters ausgebildet sein. Dies hat den Vorzug, das der Behälter einstückig gespritzt oder tiefgezogen werden kann, beispielsweise aus Polyäthylen oder Polypropylen.

Der Behälter gemäß der Erfindung eignet sich beispielsweise zur Aufnahme von Kartenmaterial, Handschuhen, Brillen oder Reiseproviant, aber auch von Abfall (Papiertüten, Zigarettenschachteln o. dgl.). Nach Entfernung des Abfalls läßt sich der Behälter leicht säubern und kann anschließend für andere Zwecke wieder eingesetzt werden, etwa für die Aufnahme von Proviant.

Eine vorteilhafte Ausgestaltung der Erfindung besteht darin, daß an der Innenseite von zwei gegenüberliegenden Wänden des Behälters Vorsprünge zum Halten von stehenden Gegenständen ausgebildet sind. In einem solchen Fall kann der Behälter beispielsweise geöffnete Getränkedosen, Flaschen oder dgl. aufnehmen, so daß der Fahrer oder der Beifahrer unterwegs nach dem Trinken einer Teilmenge die Dose oder Flasche wieder abstellen kann, ohne daß während der Fahrt die Gefahr besteht, daß diese umkippt und die Flüssigkeit ausläuft.

Wenn dabei die Vorsprünge als in die Wände eingeformte Sicken ausgebildet sind, lassen sich die Behälter leicht stapeln, sofern sie zum Boden hin konvergierende Wände haben. Dies ist beispielsweise wichtig für Transport und Lagerhaltung.

Die Erfindung ist nachstehend an zwei Ausführungsbeispielen erläutert, die in der Zeichnung dargestellt sind. Es zeigen:

Figur 1 eine Vorderansicht des Behälters mit geschlossenem Klappdeckel,

Figur 2 die Draufsicht des Behälters bei geöffnetem Klappdeckel,

Figur 3 die Seitenansicht des in Figur 2 gezeigten Behälters und

Figur 4 die Draufsicht einer Variante des geöffneten Behälters.

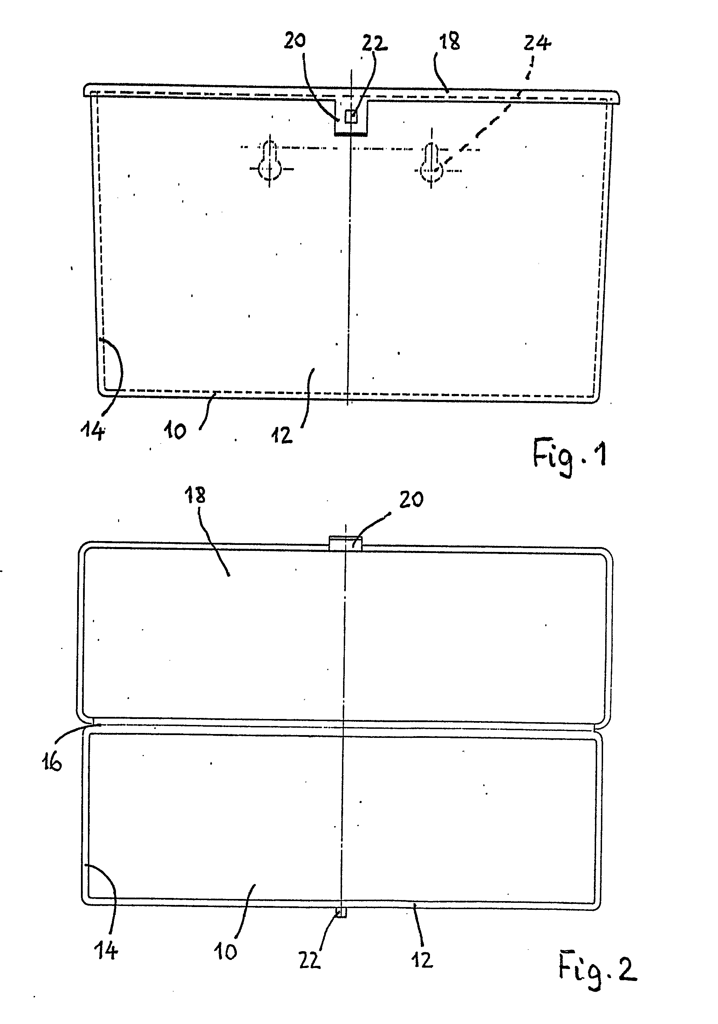

Der in den Figuren 1 bis 3 gezeigte Behälter gemäß der Erfindung ist einstückig aus einem thermoplastischen Kunststoff hergestellt und hat einen etwa rechteckigen Boden 10, zwei sich in Längsrichtung erstreckende Wände 12 und zwei quer dazu verlaufende Wände 14. Die Wände 12 und 14 sind zum Boden 10 hin konvergierend angeordnet, so daß sich mehrere Behälter im geöffneten Zustand stapeln lassen.

Am oberen Rand der hinteren Wand 12 ist ein Gelenkstreifen 16 angeformt, der als Scharnierband für einen Klappdeckel 18 dient. An seiner vorderen Längskante hat der Klappdeckel 18 eine Verschlußlasche 20, die im geschlossenen Zustand des Klappdeckels 18 mit einem Verschlußzapfen 22 in Eingriff gebracht werden kann, der von der vorderen Wand 12 des Behälters absteht.

- 4 -

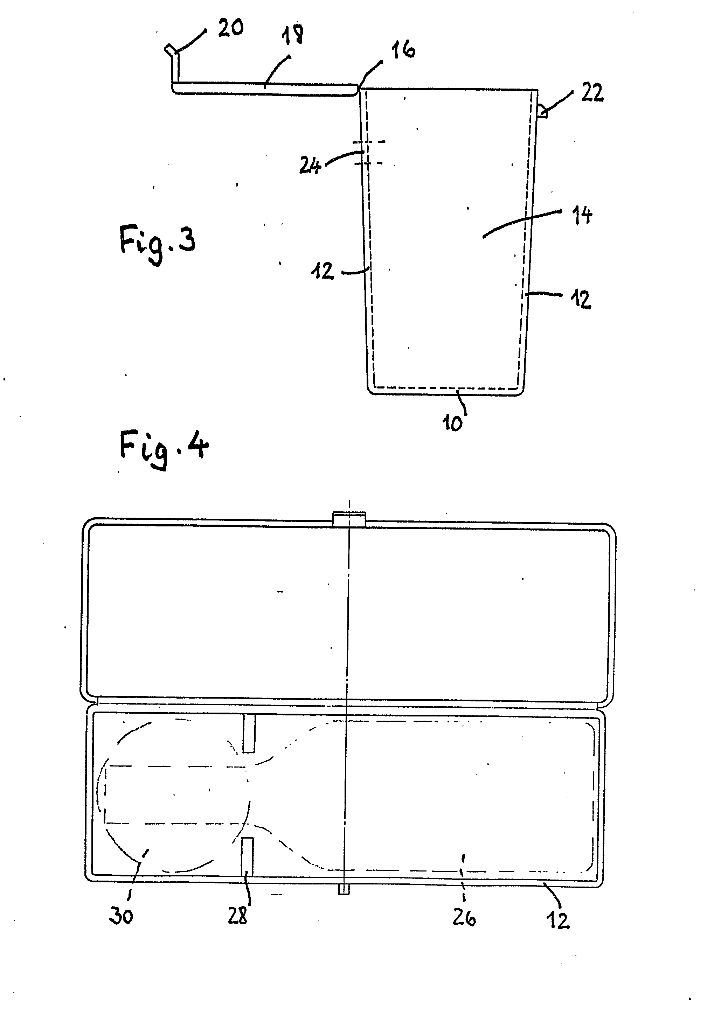

Wie in den Figuren 1 und 3 angedeutet ist, sind in die hintere Wand 12 des Behälters Ösen 24 eingearbeitet, mit denen der Behälter an einem Haken oder dgl. aufgehängt werden kann. Statt der Ösen kann an der hinteren Wand 12 auch ein Haftband, Klettband oder dgl. befestigt sein, mit dessen Hilfe der Behälter an einem Gegenhaftband befestigt werden kann.

In dem in Figur 4 gezeigten Ausführungsbeispiel ist der Behälter so bemessen, daß er übereinander liegend zwei Flaschen 26 aufnehmen kann. Außerdem stehen von der Innenseite der beiden Wände 12 zwei gegenüberliegende Vorsprünge 28 ab, die ein etwa gleichseitiges Fach bilden, in welchem stehend eine Dose 30, eine Flasche oder dgl. abgestellt werden kann. Die leistenförmigen Vorsprünge 28 behindern dabei die liegende Aufnahme einer Flasche 26 nicht und sorgen dafür, daß die Dose 30 o. dgl. nicht umfallen kann.

Wenn die Vorsprünge 28 nicht auf ihrer gesamten Länge senkrecht ausgebildet sind, sondern einen in das Innere des Faches für eine Dose 30 o. dgl. ragenden, gewundenen Teil haben, dessen freies Ende elastisch nachgiebig gegen die eingesetzte Dose 30 o. dgl. drückt, dann wird diese spielfrei gehalten, wobei sich der gewundene Teil des Vorsprungs 28 an den Durchmesser der jeweiligen Dose 30 o. dgl. elastisch anpaßt.

Es ist auch möglich, die Vorsprünge 28 als in die beiden Wände 12 eingeformte Sicken auszubilden, die sich in vertikaler Richtung nicht über die gesamte Höhe der Wände 12 erstrecken. Da diese Sicken auch auf der Außenseite der Wände 12 vorhanden sind, stehen sie einer Stapelung der Behälter nicht entgegen.

Patentansprüche

1. Behälter zur Aufnahme von Kleinteilen in Fahrzeugen, der einen Boden und davon abstehende Wände aufweist, dadurch g e - k e n n z e i c h n e t , daß an einer Wand (12) Mittel zur lösbaren Befestigung des Behälters im Fahrzeug ausgebildet sind.

2. Behälter nach Anspruch 1, dadurch gekennzeichnet, daß die Mittel zur Befestigung als Ösen (24) zum Aufhängen an Schrauben, Haken oder dgl. ausgebildet sind.

3. Behälter nach Anspruch 1, dadurch gekennzeichnet, daß die Mittel zur Befestigung als Haftband ausgebildet sind.

4. Behälter nach Anspruch 1, dadurch gekennzeichnet, daß die Mittel zur Befestigung Magnete sind.

5. Behälter nach einem der vorhergehenden Ansprüche, dadurch gekennzeichnet, daß an einer Wand (12) ein Klappdeckel (18) angebracht ist.

6. Behälter nach Anspruch 5, dadurch gekennzeichnet, daß der Klappdeckel (18) über ein Scharnierband am oberen Rand der Wand (12) angelenkt ist.

7. Behälter nach Anspruch 6, dadurch gekennzeichnet, daß das Scharnierband als Gelenkstreifen (16) des aus Kunststoff hergestellten Behälters ausgebildet ist.

8. Behälter nach einem der Ansprüche 5 bis 7, dadurch gekennzeichnet, daß der Klappdeckel (18) ein Verschlußorgan (20) aufweist, das mit einem Verschlußelement (22) an einer Wand (12) des Behälters in Eingriff bringbar ist.

9. Behälter nach einem der vorhergehenden Ansprüche, dadurch gekennzeichnet, daß an der Innenseite von zwei gegenüberliegenden Wänden (12) des Behälters Vorsprünge (28) zum Halten von stehenden Gegenständen (30) ausgebildet sind.

0241047

1/2

20  22  18  24

Fig. 1

14  10  12

18  20

16

14  10  22  12

Fig. 2

Fig.3

Fig.4

## Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-U-8 600 880  (VON PUTTKAMER et al.) <br> * Seite 5, Zeilen 10-20 * | 1 | B 60 R    7/04 |
| Y | | 2-9 | |
| Y | US-A-3 104 131  (KRONE) <br> * Spalte 1, Zeile 67 - Spalte 2, Zeile 2; Spalte 3, Zeilen 46-75 * | 5-8 | |
| Y | US-A-3 986 649  (HEIMSTRA) <br> * Spalte 4, Zeilen 26-37 * | 2 | |
| Y | EP-A-0 120 100  (TADEUSZ) <br> * Seite 2, Zeilen 4-9 * | 3 | |
| Y | CH-A-  363 251  (FRITZ) <br> * Seite 4, Absatz 4 * | 4 | RECHERCHIERTE SACHGEBIETE (Int. Cl.4) <br> B 60 R    7/00 |
| Y | AT-B-  353 623  (K. HIRSCH KUNSTSTOFFTECHNIK) <br> * Seite 2, Zeilen 51-53 * | 9 | |
| A | US-A-3 909 092  (KIERNAN) <br> * Spalte 3, Zeile 56 - Spalte 4, Zeile 45 * | 1,5-8 | |

Der vorliegende Recherchenbericht wurde für alle Patentansprüche erstellt.

| Recherchenort <br> BERLIN | Abschlußdatum der Recherche <br> 26-06-1987 | Prüfer <br> STANDRING M A |
|---|---|---|